# EUROPÄISCHE PATENTSCHRIFT

(11) **EP 3 661 737 B1**
(45) Veröffentlichungstag und Bekanntmachung des Hinweises auf die Patenterteilung: **11.06.2025**
(21) Anmeldenummer: 18753343.5
(22) Anmeldetag: 02.08.2018
(51) Int. Cl.: B32B 3/06, B32B 1/00, B32B 7/12, B32B 15/00, B32B 15/08, B32B 15/10, B32B 15/12, B32B 21/00

(54) **VERFAHREN ZUR EINFÜGUNG EINES VERBINDUNGSELEMENTS IN EINE SANDWICHSTRUKTUR**
METHOD FOR INSERTING A CONNECTING ELEMENT INTO A SANDWICH STRUCTURE
PROCÉDÉ D'INSERTION D'UN ÉLÉMENT DE LIAISON DANS UNE STRUCTURE SANDWICH

(30) Priorität: 03.08.2017 DE 102017213501
(43) Veröffentlichungstag der Anmeldung: 10.06.2020
(73) Patentinhaber: Lufthansa Technik AG, 22335 Hamburg (DE)
(72) Erfinder: OLDENBURG, Frederic, 22303 Hamburg (DE); REIFFERSCHEID, Moritz, 21483 Basedow (DE)
(74) Vertreter: Glawe, Delfs, Moll
(86) Internationale Anmeldenummer: PCT/EP2018/071015
(87) Internationale Veröffentlichungsnummer: WO 2019/025553

(56) Entgegenhaltungen:
- EP-A1- 0 633 132
- EP-A2- 0 891 858
- EP-B1- 2 303 567
- CN-A- 102 256 766
- CN-A- 102 753 767
- DE-A1- 102014 108 547
- DE-A1- 2 911 058
- GB-A- 1 353 236
- JP-A- H06 126 869
- US-A- 4 093 491
- US-A- 4 428 705

## Beschreibung

Die Erfindung betrifft ein Verfahren zur Herstellung einer Sandwichstruktur mit eingelassenem Verbindungselement.

Insbesondere im Bereich des Leichtbaus, wie er bspw. im Luftfahrtbereich Verwendung findet, wird regelmäßig auf Sandwichstrukturen zurückgegriffen. Bei entsprechenden Strukturen ist zwischen zwei kraftaufnehmenden festen Decklagen ein vergleichsweise weicher Kern angeordnet, der die beiden Decklagen schubfest miteinander verbindet. Je nach verwendetem Kern können diese Strukturen bei geringem Gewicht sehr biegesteif sein. Der Kern weist dabei häufig eine sogenannte, dem Fachmann geläufige Honigwabenstruktur auf.

Sowohl für die Decklagen als auch den Kern sind verschiedenste Materialen möglich. Im Bereich der Luftfahrt und insbesondere für den Innenausbau der Kabinen von Verkehrsflugzeugen werden häufig Sandwichstrukturen mit zwei Glasfaserdeckschichten, getränkt mit Phenolharz und einem Kern aus einer mit Phenolharz getränkten Aramidwabenstruktur verwendet. Um einen ansprechenden optischen Eindruck zu erwecken, werden entsprechende Sandwichsstrukturen zumindest an den im eingebauten Zustand sichtbaren Flächen mit einem Furnier versehen. Soll bspw. der Eindruck hochwertiger Massivholzmöbel vermittelt werden, wird zunächst Holzfurnier an die Sandwichsstruktur geklebt und anschließend mit Hochglanzlack versehen.

Sandwichstrukturen liegen in aller Regel als Halbzeug in Form von Sandwichplatten vor. Um entsprechende Sandwichplatten mit anderen Komponenten zu verbinden, werden an den dafür vorgesehenen Verbindungspunkten regelmäßig Innengewindebuchsen - sog. Inserts - in die Sandwichplatte eingebracht. Dazu wird ausgehend von einer der beiden Deckschichten ein Sackloch in die Sandwichplatte gefräst, in dem das Insert mit Hilfe von Klebstoff derart befestigt wird, dass das Innengewinde als Anbindungspunkt dienen kann.

Die andere Deckschicht ist im Bereich eines für ein Insert vorgesehenen Sacklochs durchgehend, also insbesondere nicht von einer Öffnung durchbrochen. Gleiches gilt auch für ein darauf angebrachtes Furnier.

An der anderen Deckschicht zeigen sich jedoch regelmäßig Oberflächeneinzüge, sog. Insert Pulls. Bei diesen Insert Pulls wird die andere Deckschicht um wenige Mikrometer in Richtung des Kerns der Sandwichplatte eingezogen. Auch wenn die Vertiefungen als solche mit dem bloßen Auge nicht zu erkennen sind, zeigen sich bei auf einer Sandwichstruktur angebrachten hochglanzlackierten und polierten Oberflächenfurnieren in Form von gestörten Lichtreflexionen deutlich. Die Nachbearbeitung der von Insert Pull betroffenen Bereiche, welche regelmäßig eine Neulackierung erfordert, ist aufwendig und kostenintensiv.

Um das Auftreten von Insert Pulls zu verhindern ist im Stand der Technik bekannt, den Kern der Sandwichstruktur in den Bereichen, in denen Inserts vorgesehen werden sollen, bereits während der Herstellung der Sandwichstruktur durch einen steifen Füllstoff zu ersetzen, in dem anschließend ein Insert auf die beschriebene Weise eingesetzt werden kann. Bei entsprechenden Sandwichstrukturen tritt zwar ein Insert Pull nicht mehr auf, allerdings ist das Gewicht gegenüber Sandwichstrukturen ohne entsprechenden Füllstoff erhöht. Auch ist die Herstellung entsprechender Sandwichstrukturen aufwendig und daher nicht für Einzelanfertigungen oder Kleinstserien geeignet.

Das Dokument US 4 428 705 A beschreibt ein zweiteiliges Insert für Sandwichstrukturen, bei dem ein erstes Spreizelement, beispielsweise aus Kunststoff, in ein in der Sandwichstruktur geschaffenes und bis zur gegenüberliegenden Deckschicht reichendes Sackloch eingebracht wird. Auf dieses Spreizelement wird ein metallisches Anschlussstück mit Innengewinde aufgedrückt, wodurch sich das Spreizelement weitet und seitlich in die Kernschicht der Sandwichstruktur eingreift. Die bündige Ausrichtung des metallischen Anschlussstücks mit der Oberseite der Sandwichstruktur wird dabei während des Aufdrückens auf das Spreizelement sichergestellt.

Das Dokument DE 10 2014 108547 A1 offenbart einen Befestigungseinsatz für eine Sandwichstruktur, bei dem das Problem des Insert-Pulls vermieden wird, in dem ein Luftspalt zwischen dem Befestigungseinsatz bzw. dessen Verklebung und der im Bereich des Befestigungseinsatzes nicht durchbrochenen Deckschicht der Sandwichstruktur vorgesehen ist.

Die Dokumente US 4 093 491 A und GB 1 353 236 A betreffen einen Befestigungseinsatz für Sandwichstrukturen, der an seiner Außenseite mit einem festen Klebstoff versehen ist, der nach dem Einsetzen durch das Einbringen von Hitze verflüssigt wird, um nach dem anschließenden Wiedererstarren eine Stoffflussverbindung zwischen Befestigungseinsatz und Sandwichstruktur herzustellen. Das Dokument US 4 093 491 A offenbart dabei insbesondere ein hierfür geeignetes Werkzeug.

Das Dokument CN 102 753 767 A schlägt verschiedene Ausführungsformen von Inserts für Wabengitter-Sandwichstrukturen vor, die sich verschiedentlich in die Struktur des Wabengitters eingreifen und mit deren Bewandungen verklebt werden. Die Inserts können nach Einsetzen in die Sandwichstruktur aus dieser hervorstehen.

Aus dem Dokument JP H06 126869 A ist ein Insert mit einem umlaufenden Flansch bekannt, dessen Durchmesser größer ist als der Durchmesser der Öffnung in der Deckschicht einer Sandwichsstruktur. Das Insert liegt mit diesem Flansch flächig von innen oder außen an der Deckschicht an.

Das Dokument CN 102 256 766 A ist auf ein zweiteiliges Insert für Sandwichsstrukturen aus thermoplastischem Kunststoff gerichtet, bei dem die beiden Teile des Inserts in situ durch mechanische Oszillation wenigstens bereichsweise zum Schmelzen gebracht werden, wodurch thermoplastisches Material auch in die Kernschicht eindringen kann, um so eine Ankerwirkung zu entfalten.

Das Dokument DE 29 11 058 A1 offenbart ein kostengünstig durch Gießen oder Pressformen herstellbares Insert, welches bündig in eine Sandwichplatte mit Harz eingeklebt werden kann.

Das Dokument EP 3 303 567 B1 zeigt eine Fahrzeugstruktur bei der zwei Bauteile formschlüssig mit einer Zapfenverbindung zusammengeführt werden, wobei die Zapfenverbindung derart Spiel aufweist, dass ausreichender Freiraum zur Auffüllung mit Harz zur Herstellung eines zusätzlichen Stoffschlusses gegeben ist.

Der Erfindung liegt die Aufgabe zugrunde, ein Verfahren zur Herstellung einer Sandwichstruktur mit einem darin eingelassenen Verbindungselement zu schaffen, bei dem die Nachteile aus dem Stand der Technik nicht mehr oder nur noch im verminderten Umfang auftreten.

Gelöst wird diese Aufgabe durch das Verfahren gemäß dem Hauptanspruch. Vorteilhafte Weiterbildungen sind Gegenstand der abhängigen Ansprüche.

Demnach betrifft ein Aspekt der Beschreibung eine Sandwichstruktur mit zwei Deckschichten und einem dazwischen angeordneten Kern, welcher zur Verbindung mit weiteren Bauteilen wenigstens ein Verbindungselement aufweist, wobei das Verbindungselement ein an einer Deckschicht in die Sandwichstruktur eingelassenes Insert umfasst, dessen Einlasstiefe kleiner ist als die Dicke des Kerns der Sandwichstruktur, und wobei das Insert oder ein auf dem Insert angeordnetes Ausgleichselement mit der Außenseite der Deckschicht, über die das Insert eingelassen ist, bündig nachgearbeitet oder aus dieser hervorstehend ist.

Die Erfindung betrifft ein Verfahren zur Einfügung eines Verbindungselementes in eine Sandwichstruktur mit zwei Deckschichten und einem dazwischen angeordneten Kern, wobei das Verbindungselement ein Insert umfasst, mit den Schritten:
a) Herstellen eines Sacklochs ausgehend von einer Deckschicht der Sandwichstruktur;
b) Einbringen des Verbindungselementes in das Sackloch und Befestigen des Verbindungselements darin, sodass es aus der Deckschicht hervorstehend angeordnet ist; und
c) Nacharbeiten des Verbindungselementes durch Schleifen, sodass es bündig mit der Deckschicht oder um eine vorgegebene Höhe aus der Deckschicht hervorstehend ist.

Die "Dicke des Kerns der Sandwichstruktur" entspricht dem Abstand zwischen den beiden Deckschichten. Mit "Einlasstiefe" ist diejenige Tiefe bezeichnet, um die das Insert in die Sandwichstruktur eingelassen ist.

Der Erfindung liegt die Erkenntnis zugrunde, dass Insert Pulls insbesondere dann auftreten, wenn ein Insert gegenüber der Deckschicht, über welche das Insert in die Sandwichstruktur eingelassen ist, zurückversetzt angeordnet ist. Wird eine in das Innengewinde des Inserts eingeführte Schraube angezogen, während die Sandwichstruktur an einer anderen Komponente anliegt, kann es zu einer Verformung der Sandwichstruktur kommen, die letztendlich zu einem Insert Pull der anderen Deckschicht führen kann.

Um dies zu vermeiden, ist erfindungsgemäß vorgesehen, dass das Verbindungselement umfassend ein Insert mit der Außenseite der Deckschicht, an der es eingelassen ist, bündig nachgearbeitet oder aus der Deckschicht hervorstehend ist. Dadurch wird verhindert, dass es durch das Anziehen einer in das Insert eingeführten Schraube zu einer Relativbewegung zwischen Verbindungselement und der Sandwichstruktur und somit zu einem Insert Pull kommen kann.

Unter einem nachgearbeiteten Verbindungselement ist ein Verbindungselement zu verstehen, dass im in die Deckschicht eingesetzten Zustand nachgearbeitet wird, bis es mit der Deckschicht bündig ist. Das kann bspw. durch Auftragen oder Abtragen von Material erfolgen. Entsprechend der Erfindung, erfolgt dies durch Schleifen. Ein Verbindungselement, das im Sinne dieser Erfindung nachgearbeitet wurde, lässt sich dadurch erkennen, dass es in exakter Weise an die Ebene der Deckschicht angepasst ist. Ferner ist dies durch die bei der Auf- bzw. Abtragung entstehenden strukturellen Änderungen des Verbindungselements erkennbar.

Erfindungsgemäß erfolgt das Nacharbeiten des Verbindungselements durch ein Beischleifen.

Das Verbindungselement wird zunächst aus der Deckschicht hervorstehend angeordnet. Anschließend kann das Verbindungselement, bei Bedarf, bündig mit eben dieser Deckschicht beigeschliffen werden. In anderen Worten wird das zunächst über der Deckschicht hervorstehende Verbindungselement soweit abgeschliffen, bis es bündig mit der Deckschicht ist. Die Deckschicht selbst wird bei diesem Prozess nicht beschädigt bzw. geschliffen. Ob ein Verbindungselement bündig mit der Deckschicht angeordnet wurde oder bündig beigeschliffen wurde, lässt sich auch im Nachhinein ohne Weiteres erkennen, bspw. anhand von Schleifspuren und/oder der Ausgestaltung der Kanten des Verbindungselementes an der beigeschliffenen Oberfläche. Anstelle des bündigen Beischleifens ist es auch möglich, dass Verbindungselement aus derjenigen Deckschicht, über die es in die Sandwichstruktur eingelassen ist, hervorstehend ist bzw. bleibt. Auch in diesem Fall wird ein Insert Pull an der anderen Deckschicht wirksam vermieden.

Sofern das Verbindungselement nicht bündig beigeschliffen ist, steht es vorzugsweise um weniger als 6 mm, weiter vorzugsweise um weniger als 3 mm aus der Deckschicht, über die es eingelassen wurde, hervor. Auch ein hervorstehendes Verbindungselement kann geschliffen sein, um bspw. eine gewünschte Höhe des Hervorstehens und/oder eine Parallelität der geschliffenen Fläche des Verbindungselementes mit der Deckschicht zu erreichen.

Das Verbindungselement kann ausschließlich ein Insert umfassen. Es ist aber auch möglich, dass das Verbindungselement ein auf dem Insert angeordnetes, mit der Deckschicht überdeckungsfreies Ausgleichselement umfasst. "Überdeckungsfrei" bedeutet in diesem Zusammenhang, dass das Ausgleichselement in eine Projektion senkrecht durch die Deckschicht sich mit dieser nicht überschneidet. In anderen Worten befindet sich das Ausgleichselement in dieser Projektion vollständig innerhalb der Umfangslinie des Insert. Ist ein Ausgleichselement vorgesehen, kann dieses mit der Deckschicht bündig nachgearbeitet, vorzugsweise beigeschliffen sein, oder steht über die Deckschicht hervor. Im letztgenannten Fall ist es auch möglich, dass das Insert selbst bereits über die Deckschicht hervorsteht, eine größere Höhe des Hervorstehend aber durch ein zusätzliches Ausgleichselement erreicht wird. Das Ausgleichselement kann nach dem Einlassen des Inserts in die Sandwichstruktur auf diesem angeordnet werden. In diesem Fall kann das Insert zunächst gemäß dem Stand der Technik in die Sandwichstruktur eingebracht werden und wird erst anschließend durch das Aufbringen des Ausgleichselementes zu einem erfindungsgemäßen Verbindungselement.

Das Ausgleichselement kann aus nach Aufbringen auf das Insert aushärtender Spachtelmasse oder ein vorgefertigtes Bauteil sein, welches mit dem Insert in Kontakt steht oder vorzugsweise stoffschlüssig mit dem Insert verbunden ist. Das vorgefertigte Bauteil kann bspw. ringförmig und vergleichbar zu einer Unterlegscheibe ausgestaltet sein. Ist das Ausgleichselement ein vorgefertigtes Bauteil ist bevorzugt, wenn es aus gegenüber dem Material des Inserts korrosionsbeständigem Material ist.

In einer bevorzugten Ausführungsform kann ein sowohl das Verbindungselement als auch die Deckschicht der Sandwichsstruktur überdeckendes Blech vorgesehen sein, wobei der Raum zwischen dem Insert und dem überdeckenden Blech mit der aushärtenden Spachtelmasse gefüllt ist. Das überdeckende Blech erlaubt es auf einfache Art und Weise, eine mit der Deckschicht bündige Begrenzung für die als Ausgleichselement dienende aushärtbare Spachtelmasse zu schaffen. Diese Ausführungsform erlaubt somit eine einfache und genaue mit der Deckschicht bündige Nachbearbeitung des Ausgleichselements, mithin des Verbindungselements.

Durch ein entsprechendes Blech ist es auch möglich, die Krafteinleitung im Bereich des Verbindungselementes großflächiger über die Sandwichsstruktur zur verteilen, sodass evtl. zu Beschädigungen der Sandwichsstruktur führende Belastungsspitzen vermieden werden können.

Der Kern der Sandwichsstruktur ist vorzugsweise ein Wabenkern, bspw. aus Aluminium oder faserverstärktem Kunststoff. Mit einem entsprechenden Kern lassen sich besonders leichte Sandwichstrukturen erreichen. Weiter bevorzugt ist es, wenn das Insert aus Metall ist. Bei einem Metallinsert wird regelmäßig eine hohe Tragfestigkeit des Innengewindes erreicht.

Die Sandwichstruktur gemäß einem Aspekt der Beschreibung ist besonders in den Fällen vorteilhaft, in denen auf der Deckschicht, über die das Verbindungselement nicht eingelassen ist, eine glänzende Oberflächenschicht, wie bspw. ein hochglanzlackiertes Holzfurnier, Lack, Folie, Leder oder sonstiges Textil, angebracht ist.

Zur Erläuterung des erfindungsgemäßen Verfahrens wird auf die vorstehenden Erläuterungen verwiesen.

Die Erfindung wird nun anhand vorteilhafter Ausführungsformen unter Bezugnahme auf die beigefügten Zeichnungen beispielhaft beschrieben. Es zeigen:
- Figur 1a-d:: ein erstes Ausführungsbeispiel eines erfindungsgemäßen Verfahrens zur Herstellung einer ersten Sandwichstruktur gemäß einem Aspekt der Beschreibung;
- Figur 2a-e:: ein zweites Ausführungsbeispiel eines erfindungsgemäßen Verfahrens zur Herstellung einer zweiten Sandwichstruktur gemäß einem Aspekt der Beschreibung; und
- Figur 3:: eine drittes Ausführungsbeispiel eines erfindungsgemäßen Verfahrens zur Herstellung einer dritten Sandwichstruktur gemäß einem Aspekt der Beschreibung.

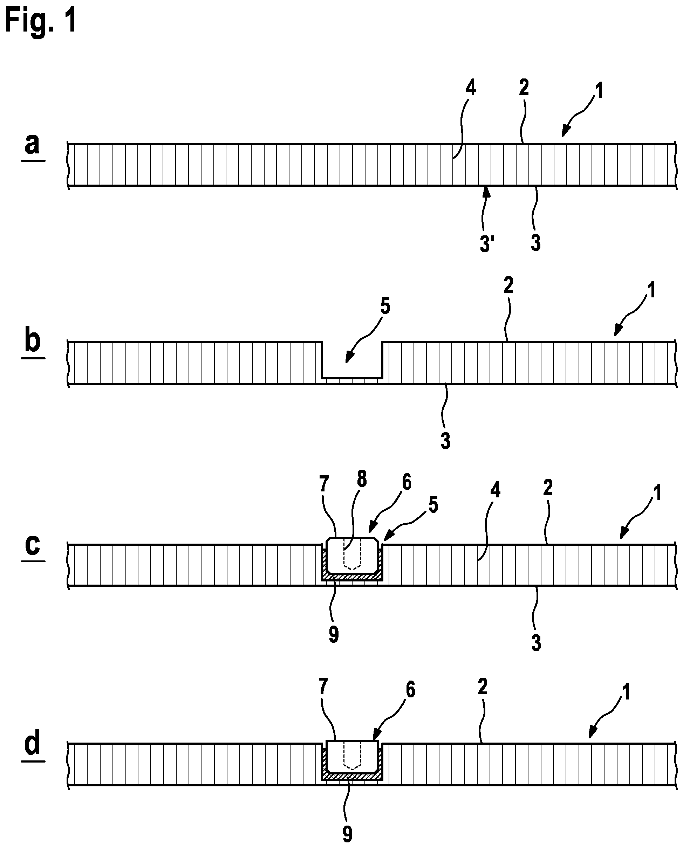

In Figur 1a-d ist ein Verfahren zur Herstellung einer ersten Sandwichstruktur 1 gezeigt.

Figur 1a zeigt den Ausgangzustand der Sandwichsstruktur 1. Die Sandwichstruktur 1 umfasst zwei Deckschichten 2, 3 die über einen als Wabenkern ausgebildeten Kern 4 fest miteinander verbunden sind. Sowohl die Deckschichten 2, 3 als auch der Kern 4 sind aus faserverstärktem Kunststoff gefertigt. Auf der in Figur 1a unten dargestellten Deckschicht 3 ist ein hochglanzlackiertes Holzfurnier 3' angeordnet.

In einem ersten Schritt wird ein ausgehend von der einen Deckschicht 2 der Sandwichstruktur 1 durch Fräsen ein Sackloch 5 hergestellt, sodass die andere Deckschicht 3 vollständig intakt bleibt (Figur 1b).

Anschließend wird in dieses Sackloch 5 ein Verbindungselement 6 bestehend aus einem Insert 7 mit einem Innengewinde 8 angeordnet und mit Klebstoff 9 darin befestigt. Im Unterschied zum Stand der Technik wird das Insert 7 dabei jedoch über die Deckschicht 2 der Sandwichstruktur 1 hervorstehend angeordnet. Die Einlasstiefe des Inserts 7 ist dabei geringer als die Dicke des Kerns 4, sodass zwischen Insert 7 und der anderen Deckschicht 3 ein Abstand besteht (Figur 1c).

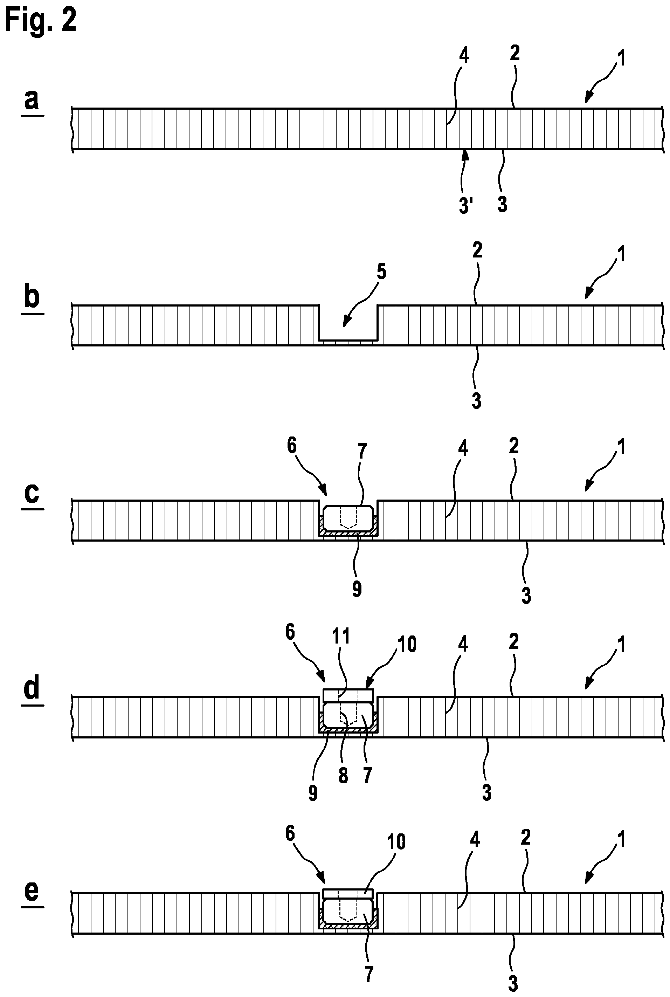

Nach Aushärten des Klebstoffs 9 wird das Verbindungselement 6 derart beigeschliffen, dass es nur noch um eine vorgegebene Höhe über der Deckschicht 2 hervorsteht (Figur 1d). Dieses Beischleifen lässt sich auch im Nachgang zum eigentlichen Verfahren in der Regel noch gut feststellen, bspw. anhand von Schleifspuren oder dem Fehlen der originär vorgesehenen Fase am Rand der Oberseite des Inserts 7 (vgl. Figur 2c). Es ist selbstverständlich auch möglich, dass die vorgegebene Höhe gleich Null ist, das Verbindungselement 6 also bündig mit der Deckschicht 2 geschliffen wird.

Indem das Verbindungselement 6 erfindungsgemäß gesichert bündig mit oder hervorstehend über die Deckschicht 2 ist, kann ein Insert Pull an der anderen Deckschicht 3 im Bereich des Verbindungselementes 6 wirksam vermieden werden.

In Figur 2 ist ein zweites Ausführungsbeispiel eines erfindungsgemäßen Verfahrens zur Herstellung einer Sandwichstruktur 1 gemäß einem Aspekt der Beschreibung dargestellt.

Figur 2a zeigt dabei den zu Figur 1a identischen Ausgangzustand der Sandwichsstruktur 1. Die Sandwichstruktur umfasst wieder zwei Deckschichten 2, 3 aus faserverstärktem Kunststoff, die über einen als Wabenkern ausgebildeten Kern 4 - ebenfalls aus faserverstärktem Kunststoff - fest miteinander verbunden sind. Auf der einen Deckschicht 3 ist ein hochglanzlackiertes Holzfurnier 3' angeordnet.

Erneut wird in einem ersten Schritt ausgehend von der Deckschicht 2 der Sandwichstruktur 1, die nicht mit dem Holzfurnier 3' versehen ist, durch Fräsen ein Sackloch 5 hergestellt, wobei die andere Deckschicht 3 und das darauf angeordnete Holzfurnier 3' vollständig intakt bleibt (Figur 2b).

Anschließend wird in dieses Sackloch 5 auf bekannte Weise ein Insert 7 als Teil des Verbindungselementes 6 eingebracht und mit Klebstoff 9 befestigt. Das Insert 7 ist dabei in der Sandwichstruktur 1 versunken, d.h. die von außen zugängliche Seite des Inserts 7 ist hinter die Deckschicht 2 zurücktretend angeordnet. Die Einlasstiefe des Inserts 7 ist jedoch auch hier geringer als die Dicke des Kerns 4 (Figur 2c).

Anschließend wird auf das Insert 7 zur Vervollständigung des Verbindungselementes 6 ein separates Bauteil als Ausgleichselement 10 mit einer Formgebung vergleichbar einer Unterlegscheibe vorzugsweise stoffschlüssig - in diesem Fall durch Kleben - mit dem Insert 7 verbunden. Das Ausgleichselement 10 weist eine Durchgangsöffnung 11 auf, sodass das Innengewinde 8 des Inserts 7 zugänglich bleibt. Gleichzeitig ist das Ausgleichselement 10 überdeckungsfrei mit der Deckschicht 2(Figur 2d).

Abschließend wird das Verbindungselement 6, insbesondere also das separate Ausgleichselement, derart beigeschliffen, dass es nur noch um eine vorgegebene Höhe über der Deckschicht 2 hervorsteht (Figur 2e). Es ist selbstverständlich auch möglich, dass die vorgegebene Höhe gleich Null ist, das Verbindungselement 6 also bündig mit der Deckschicht 2 geschliffen wird. Auch hier kann ein Insert Pull an der anderen Deckschicht 2 im Bereich des Verbindungselementes 6 wirksam vermieden werden.

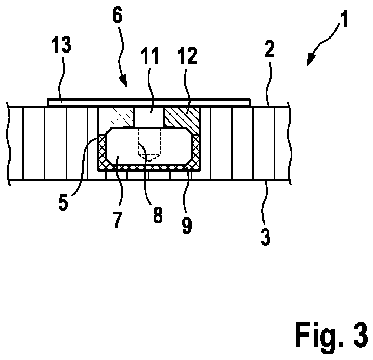

In Figur 3 ist ein drittes Ausführungsbeispiel eines erfindungsgemäßen Verfahrens zur Herstellung einer Sandwichstruktur 1 gemäß einem Aspekt der Beschreibung dargestellt.

Wie bei den vorangehend erläuterten Ausführungsbeispielen wird in dem Sackloch 5 der Sandwichstruktur 1 zunächst das Insert 7 mit Klebstoff 9 befestigt. Das Insert 7 reicht dabei allerdings nicht bis zur Deckschicht 2 heran, das Insert 7 ist also hinter der Deckschicht 2 zurücktretend angeordnet.

Die erfindungsgemäße Nacharbeitung des Verbindungselements 6, so dass dieses mit der Deckschicht 2 bündig ist, erfolgt in diesem Fall durch das Auftragen einer aushärtenden Spachtelmasse 12; diese fungiert als Ausgleichselement 10. Um ein aufwendiges Beispachteln der Spachtelmasse - was ebenfalls denkbar wäre - zu vermeiden, ist ein die Deckschicht 2 überdeckendes Blech 13 vorgesehen. Das Blech 13 bildet zusammen mit dem Insert 7 einen Füllraum, der mit der Spachtelmasse 12 gefüllt wird. In dem so gebildeten Füllraum wird die Spachtelmasse so verteilt, dass sie ein mit der Deckfläche 2 bündiges Ausgleichselement 10 bildet. Bei diesem Vorgehen weist das Blech 13 eine Füllöffnung zum Befüllen des Füllraums mit Spachtelmasse auf.

Alternativ kann auch zunächst nach Einsetzen des Inserts 7 das Sackloch 5 mit Spachtelmasse 12 gefüllt werden. Dabei wird vorzugsweise etwas mehr Spachtelmasse 12 aufgetragen als der Füllraum aufnehmen kann. Anschließend wird das Blech 13 über dem Sackloch 5 und die Deckschicht 2 überdeckend angeordnet, so dass die überschüssige Spachtelmasse 12 aus dem Füllraum herausgedrückt wird. Durch dieses Vorgehen kann ebenfalls sichergestellt werden, dass das Verbindungselement 6 bündig mit der Deckschicht 2 nachgearbeitet ist.

Damit das Innengewinde 8 zugänglich bleibt, ist vorzugsweise eine Durchgangsöffnung 11 vorgesehen.

## Patentansprüche

1. Verfahren zur Einfügung eines Verbindungselementes (6) in eine Sandwichstruktur (1) mit zwei Deckschichten (2, 3) und einem dazwischen angeordneten Kern (4), wobei das Verbindungselement (6) ein Insert (7) umfasst, mit den Schritten:
a) Herstellen eines Sacklochs (5) ausgehend von einer Deckschicht (2) der Sandwichstruktur (1);
b) Einbringen des Verbindungselementes (6) in das Sackloch (5) und Befestigen des Verbindungselements (6) darin, sodass es aus der Deckschicht (2) hervorstehend angeordnet ist; und
c) Nacharbeiten des Verbindungselementes (6) durch Schleifen, sodass es bündig mit der Deckschicht (2) oder um eine vorgegebene Höhe aus der Deckschicht (2) hervorstehend ist.

2. Verfahren nach Anspruch 1,
**dadurch gekennzeichnet, dass**
das Verbindungselement (6) auf eine Höhe von weniger als 6 mm, vorzugsweise um weniger als 3 mm über der Deckschicht (2) abgeschliffen wird.

3. Verfahren nach einem der vorhergehenden Ansprüche,
**dadurch gekennzeichnet, dass**
das Einbringen des Verbindungselementes (6) in das Sackloch (5) und Befestigen des Verbindungselements (6) darin die Teilschritte umfassend:
- Einbringen des Inserts (7) in das Sackloch (5) und Befestigen des Inserts (7) darin; und
- Anordnen eines Ausgleichselementes (10) auf dem Insert (7), sodass dieses in einer Projektion senkrecht durch die Deckschicht (2) mit der Deckschicht (2) nicht überschneidend und auf dieser hervorstehend ist.

4. Verfahren nach Anspruch 3,
**dadurch gekennzeichnet, dass**
zum Anbringen des Ausgleichselements (10) Spachtelmasse auf das Insert (7) aufgebracht und ausgehärtet wird, oder ein separates Bauteil vorzugsweise stoffschlüssig an dem Insert (7) befestigt wird.

5. Verfahren nach einem der vorhergehenden Ansprüche,
**dadurch gekennzeichnet, dass**
auf der Deckschicht (3), von der das herzustellende Sackloch (5) nicht ausgeht, eine glänzende Oberflächenschicht, vorzugsweise ein hochglanzlackiertes Holzfurnier (3') angebracht ist.

## Claims

1. Method for inserting a connecting element (6) into a sandwich structure (1) which has two outer layers (2, 3) and a core (4) in between, wherein the connecting element (6) comprises an insert (7), having the following steps:
a) producing a blind hole (5) starting from an outer layer (2) of the sandwich structure (1);
b) introducing the connecting element (6) into the blind hole (5) and fastening the connecting element (6) therein, so that it protrudes from the outer layer (2); and
c) reworking the connecting element (6) by sanding, so that it is flush with the outer layer (2) or protrudes from the outer layer (2) by a predefined height.

2. Method according to Claim **1,**
**characterized in that**
the connecting element (6) is sanded down to a height of less than 6 **mm,** preferably less than 3 mm above the outer layer (2).

3. Method according to either of the preceding claims,
**characterized in that**
introducing the connecting element (6) into the blind hole (5) and fastening the connecting element (6) therein comprises the following sub-steps:
- introducing the insert (7) into the blind hole (5) and fastening the insert (7) therein; and
- arranging a compensating element (10) on the insert (7) such that, in a perpendicular projection through the outer layer (2), the compensating element does not overlap the outer layer (2) and protrudes therefrom.

4. Method according to Claim 3,
**characterized in that**
to mount the compensating element (10), filling compound is applied to the insert (7) and cured, or a separate component is preferably fastened to the insert (7) in an integral bond.

5. Method according to one of the preceding claims,
**characterized in that**
a glossy surface layer, preferably a wood veneer (3') coated with high-gloss varnish, is mounted on the outer layer (3) from which the blind hole (5) to be produced does not start.

## Revendications

1. Procédé d'insertion d'un élément de liaison (6) dans une structure en sandwich (1) avec deux couches de recouvrement (2, 3) et un noyau (4) disposé entre celles-ci, l'élément de liaison (6) comprenant une pièce rapportée (7), avec les étapes :
a) de réalisation d'un trou borgne (5) en partant d'une couche de recouvrement (2) de la structure en sandwich (1) ;
b) d'introduction de l'élément de liaison (6) dans le trou borgne (5) et de fixation de l'élément de liaison (6) dans celui-ci si bien qu'il est disposé de manière à faire saillie de la couche de recouvrement (2) ; et
c) d'usinage ultérieur de l'élément de liaison (6) par ponçage si bien qu'il est en affleurement avec la couche de recouvrement (2) ou fait saillie de la couche de recouvrement (2) d'une hauteur prédéfinie.

2. Procédé selon la revendication 1,
**caractérisé en ce que**
l'élément de liaison (6) est poncé au-dessus de la couche de recouvrement (2) sur une hauteur inférieure à 6 mm, de préférence inférieure à 3 mm.

3. Procédé selon l'une des revendications précédentes,
**caractérisé en ce que**
l'introduction de l'élément de liaison (6) dans le trou borgne (5) et la fixation de l'élément de liaison (6) dans celui-ci comprennent les étapes partielles :
- d'introduction de la pièce rapportée (7) dans le trou borgne (5) et de fixation de la pièce rapportée (7) dans celui-ci ; et
- de disposition d'un élément de compensation (10) sur la pièce rapportée (7) si bien que celui-ci ne coupe pas la couche de recouvrement (2) dans une projection perpendiculairement à travers la couche de recouvrement (2) et fait saillie sur celle-ci.

4. Procédé selon la revendication 3,
**caractérisé en ce que**
pour installer l'élément de compensation (10), du mastic est appliqué sur la pièce rapportée (7) et est durci, ou un composant séparé est fixé de préférence par liaison de matière sur la pièce rapportée (7).

5. Procédé selon l'une des revendications précédentes,
**caractérisé en ce que**
une couche superficielle brillante, de préférence un placage en bois (3') à vernis hautement brillant est installé sur la couche de recouvrement (3), de laquelle le trou borgne (5) à réaliser ne part pas.
